(19) **Europäisches Patentamt** / **European Patent Office** / **Office européen des brevets**

(11) **EP 2 193 586 B1**

(12) **EUROPEAN PATENT SPECIFICATION**

(45) Date of publication and mention
of the grant of the patent:
**06.11.2013 Bulletin 2013/45**

(21) Application number: **08806967.9**

(22) Date of filing: **02.09.2008**

(51) Int Cl.:
**H02J 3/34** (2006.01)    **H02J 7/34** (2006.01)

(86) International application number:
**PCT/IB2008/002270**

(87) International publication number:
**WO 2009/031002 (12.03.2009 Gazette 2009/11)**

(54) **SYSTEM FOR SIMULTANEOUSLY PRODUCING ELECTRIC AND THERMAL ENERGY**

VERFAHREN ZUR GLEICHZEITIGEN HERSTELLUNG VON ELEKTRISCHER UND THERMISCHER ENERGIE

SYSTÈME SERVANT À PRODUIRE SIMULTANÉMENT DE L'ÉNERGIE ÉLECTRIQUE ET DE L'ÉNERGIE THERMIQUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **03.09.2007 IT BO20070600**

(43) Date of publication of application:
**09.06.2010 Bulletin 2010/23**

(73) Proprietors:
• **Energifera S.R.L.**
  **Imola (IT)**
• **Zanarini, Sergio**
  **40020 Casalfiumanese (IT)**

(72) Inventor: **ZANARINI, Sergio**
  **I-40020 Casalfiumanese (IT)**

(74) Representative: **Bergadano, Mirko et al**
  **Studio Torta S.p.A.**
  **Via Viotti, 9**
  **10121 Torino (IT)**

(56) References cited:
**EP-A- 0 415 228      EP-A- 1 187 292**
**EP-A- 1 387 462      US-A- 6 160 318**
**US-B2- 6 750 633**

**Description**

TECHNICAL FIELD

The present invention relates to a system for simultaneously producing electric and thermal energy.

More specifically, the present invention relates to a system comprising a cogeneration unit for simultaneously producing alternating-electric and thermal energy, and may be used to advantage, though not exclusively, for producing electric and thermal energy in isolated areas with discontinuous electric energy sources, to which application the following description refers purely by way of example.

BACKGROUND ART

As is known, in recent years, there has been a big increase in demand for low- and medium-power cogeneration units for supplying electric energy in rural areas not covered by a conventional grid. It is very often cheaper, in fact, to produce electric energy on site using conventional fuel than to install extensive power lines connecting large electric power plants to isolated residential areas.

A cogeneration unit typically comprises an electric generator; an endothermic or internal-combustion (normally diesel) engine to start and run the electric generator; a heat exchanger for recovering the heat produced by the internal-combustion engine, and possibly also the electric generator, to produce high-temperature water for various uses; and a control unit for starting the internal-combustion engine when necessary, and controlling it to keep the electric generator running at a predetermined constant speed which depends on the frequency of the alternating electric power distributed by the grid being substituted for.

One known system for producing and supplying electric energy in isolated areas is connected to the grid, and comprises a plurality of discontinuous electric energy sources, and a generator for supplying alternating electric energy to the user load when the discontinuous sources and the grid are unable to do so. "Discontinuous sources" is intended to mean systems for producing electric energy from renewable energy sources, such as photovoltaic panels or aerogenerators, which are typically intermittent or at any rate highly variable energy sources. The system comprises a direct electric energy accumulator; and a two-way electric energy converter connecting the accumulator to the generator and grid to permit electric energy flow between the generator, grid and accumulator. The discontinuous sources are connected directly to the accumulator, so the electric energy produced by the discontinuous sources is supplied to the electric load in addition to the electric energy produced by the generator.

When electric energy cannot be supplied by the grid, the above system provides for minimizing fuel consumption, depending on how much electric energy is actually produced by the discontinuous sources, but fails to make the best use of discontinuous sources as prescribed by current electric energy supply regulations. That is, according to current regulations, any surplus electric energy produced may be sold by the user to the grid provider, on condition that it is produced by renewable sources and can be measured directly by the provider from the grid.

US 6160318 discloses a cogeneration system that operates in isolation to the grid. A motor and generator is used to supply shortfalls in supply when the discontinuous source is unable to supply sufficient power to the load.

DISCLOSURE OF INVENTION

It is an object of the present invention to provide a system for producing electric energy, which is designed to eliminate the above drawback, also provides for simultaneously producing thermal energy, and at the same time is cheap and easy to implement.

According to the present invention, there is provided a system for simultaneously producing electric and thermal energy, as claimed in the accompanying Claims.

BRIEF DESCRIPTION OF THE DRAWING

The present invention will be described with reference to the attached drawing, which shows, schematically, a system for simultaneously producing electric and thermal energy in accordance with the present invention and indicated as a whole by 1. System 1 is shown connected to a grid 2 supplying three-phase alternating electric energy at a given power frequency F, and to a three-phase electric user indicated by a generic electric load 3 comprising one or more electric users (not shown) drawing three-phase electric energy at power frequency F.

BEST MODE FOR CARRYING OUT THE INVENTION

With reference to the attached drawing, system 1 comprises a cogeneration unit 4 for simultaneously producing three-phase alternating electric energy and thermal energy, and which is parallel-connected electrically to grid 2 and electric load 3 to supply electric load 3 with alternating electric energy when grid 2 is out of order; a number of discontinuous, i.e. alternative, electric energy sources 5, such as photovoltaic panels, aerogenerators, small hydraulic turbines, etc.; and an equal number of inverters 6, each connected between a respective discontinuous source 5 and grid 2 to convert the alternating or direct electric energy produced by discontinuous source 5 to alternating electric energy at power frequency F. Obviously, the characteristics of each inverter 6 depend on the type of electric energy produced by respective discontinuous source 5.

System 1 also comprises a plurality of alternating electric power measuring units, of which a first, indicated 7, is connected between cogeneration unit 4 and grid 2 to measure the electric power PG supplied or drawn by cogeneration unit 4; a second unit, indicated 8, is connected to electric load 3 to measure the electric power PL drawn by electric load 3; and third units, indicated 9, are connected to the outputs of respective inverters 6 to measure the alternating electric power PS supplied as a whole by discontinuous sources 5.

System 1 as described above enables installation by the grid 2 provider of an alternating electric power supply meter 10- shown by a dash line in the drawing- at the output of each renewable source alternating electric energy supply line, i.e. at the output of each electric power measuring unit 9, to measure the amount of alternating electric energy produced by the user's discontinuous sources 5.

Cogeneration unit 4 comprises a known rotary electric generator 11, in particular a three- or single-phase electric motor-generator, e.g. a three-phase asynchronous motor-generator, for producing alternating electric energy at a frequency L varying as a function of rotation speed; and a known endothermic engine 12, e.g. a diesel, petrol, methane, or liquid propane gas (LPG) fuelled internal-combustion engine, for keeping the shaft of electric generator 11 rotating at however variable a speed to produce electric energy.

Cogeneration unit 4 also comprises a known electric energy accumulator 13, e.g. a number of lead batteries, for storing direct-voltage electric energy; and two inverters, of which a first, indicated 14, connects accumulator 13 to electric generator 11 to permit electric energy flow to and from electric generator 11, and a second, indicated 15, is connected between accumulator 13 and grid 2 to permit electric energy flow to and from grid 2.

More specifically, inverter 14 converts alternating electric energy at frequency L to direct electric energy, to permit electric energy flow from electric generator 11 to accumulator 13, or converts direct electric energy to alternating electric energy at frequency L, to permit electric energy flow from accumulator 13 to electric generator 11. Similarly, inverter 15 converts direct electric energy to alternating electric energy at power frequency F, to permit electric energy flow from accumulator 13 and/or inverter 14 to grid 2, or converts electric energy at power frequency F from grid 2 to direct electric energy, to permit electric energy flow from grid 2 to accumulator 13.

As shown in the drawing, cogeneration unit 4 has one or more heat exchangers 16 for producing thermal energy. More specifically, heat exchangers 16 recover the thermal energy produced by endothermic engine 12- e.g. by absorbing it from the exhaust gases and/or engine block coolant- and possibly by electric generator 11, to heat a heat-carrying fluid circulating in a hydraulic circuit 17 through heat exchangers 16.

Finally, cogeneration unit 4 also comprises a control unit 18 for continually acquiring electric power PG, PL, PS measurements from power measuring units 7, 8, 9, and controlling endothermic engine 12 and inverters 14 and 15, which preferably, though not necessarily, are pulse width modulation (PWM) operated, as a function of said measurements.

More specifically, control unit 18 has a microprocessor (not shown) programmed to process the electric powers PS, PG, PL measurements, and accordingly real-time control endothermic engine 12 and inverters 14 and 15 to regulate the electric power PG supplied by cogeneration unit 4 so that the sum of electric power PG and electric power PS supplied by discontinuous sources 5 tracks the sum of the electric power PL drawn by the load and a further predetermined net alternating electric power PN_in to be fed into grid 2.

In other words, control unit 18 is configured to ensure the electric power produced by cogeneration unit 4 and discontinuous sources 5 as a whole always meets the electric power demand by electric load 3 and by grid 2, seen as a further electric load, by privileging use of discontinuous sources 5, i.e. by only increasing electric power PG in the event of electric power PS falling off to the point of being unable to meet demand by the electric loads.

The control logic with which the microprocessor is programmed is based on the following alternating electric power balance equation :

$$PS + PG + PN\_out = PL + PN\_in \qquad (1)$$

where PN_out is the net alternating electric power supplied by grid 2 and which is normally zero, since the aim of system 1, in addition to meeting demand by electric load 3, is to feed power into, as opposed to drawing power from, grid 2.

As long as electric power PS supplied by discontinuous sources 5 is sufficient to meet electric power demand, i.e.

$$PS \geq PL + PN\_in$$

cogeneration unit 4 remains off.

Conversely, when electric power PS is no longer sufficient, control unit 18 commands inverter 14 to draw electric energy from accumulator 13 to power electric generator 11, which acts as a starting motor to immediately start up endothermic engine 12, and commands inverter 15 to draw electric energy from accumulator 13 to immediately supply enough electric power PG to meet electric power demand given by PL + PN_in. As soon as endothermic engine 12 reaches a minimum steady operating speed, control unit 18 commands inverter 14 to produce an opposite electric energy flow to before and produce direct electric energy which is normally used by inverter 15 to supply electric power PG.

In the presence of gradual variations in electric power PL and PS, tracking of the electric power demand given by PL + PN_in is met by acting on fuel supply and so adjusting the speed of the endothermic engine 12. Conversely, in the presence of variations in electric power PL and PS resulting in relatively sharp, high electric power demand peaks, inverter 15 also draws electric energy from accumulator 13.

Accumulator 13 can be recharged by electric generator 11 by means of inverter 14, or, when endothermic engine 12 is off, by grid 2 by means of inverter 15.

The above operating mode enables regulation of electric power PG independently of the response times of endothermic engine 12, which would not able to track fast variations in electric power PS supplied by discontinuous sources 5. More specifically, using a microprocessor to continually monitor alternating electric powers PS, PG and PL by means of power measuring units 7, 8 and 9, and to real-time control the two inverters 14 and 15, cogeneration unit 4 is capable of regulating electric power PG within the its operating dynamics in the space of thousandths of a second.

If even electric power PG supplied by cogeneration unit 4 fails to meet electric power demand, i.e. when electric power PG reaches a predetermined maximum value PGmax, no electric energy can be fed into grid 2 (PN_in = 0), and system 1 is forced to draw alternating electric power from grid 2 (PN_out), the amount of which is defined by equation (1) rewritten as follows:

$$PS + PGmax + PN\_out = PL$$

The control logic of control unit 18 and relative operation of system 1 have so far been described assuming grid 2 is operating properly, i.e. is capable of supplying alternating electric energy to system 1, or drawing alternating electric energy produced by system 1.

If grid 2 is not operating properly, or does not actually exist, PN_out and PN_in are always zero, and the alternating electric power balance equation (1) is simplified as follows:

$$PS + PG = PL \qquad\qquad\qquad (2)$$

Operation of control unit 18 and system 1 in the absence of grid 2 is easily inferable from the above description relative to the presence of grid 2, and therefore needs no further explanation, except to state that accumulator 13 is rechargeable by electric generator 11 by means of inverter 14, even in the absence of grid 2.

The main advantage of electric energy producing system 1 as described above is that of supplying alternating electric energy in remote areas not adequately catered to by grid 2, and at the same time feeding directly into grid 2 alternating electric energy produced by privileging use of renewable energy sources present in the area.

This therefore enables users to benefit from recent regulations governing electric energy supply, i.e. the possibility of selling surplus electric energy to the grid 2 provider, on condition that it is produced by renewable energy sources and can be measured by the provider directly from the grid. The grid 2 provider, in fact, is able to meter the amount of alternating electric energy produced by users' discontinuous sources 5 by means of meters 10, and, given the amount of alternating electric energy fed into grid 2 by the user (PN_out), is able to determine how much of this was produced by renewable sources.

System 1 also provides for stable, continuous alternating electric energy supply by employing cogeneration unit 4 described above, which provides for covering non-producing periods of discontinuous sources 5 by operating electric generator 11, and for real-time tracking sharp variations in alternating electric power supply PS by discontinuous sources 5 by continuously monitoring alternating electric powers PS, PG, PL by means of power measuring units 7, 8, 9, and accordingly controlling the two inverters 14 and 15.

**Claims**

1.  A system for simultaneously producing electric and thermal energy, and connectable to a grid (2) supplying alternating electric energy; the system (1) comprising a cogeneration unit (4) for generating electric and thermal energy, and for supplying alternating electric energy to an electric load (3); the cogeneration unit (4) comprising an electric generator (11) for producing alternating electric energy and an endothermic engine (12) for keeping the electric generator (11) running; the system (1) being **characterized in that** it comprises at least one discontinuous source (5) of electric energy, first electric energy converting means (6) connected between the discontinuous source (5) and the grid (2) to convert the electric energy produced by the discontinuous source (5) to alternating electric energy for supply to the electric load (3), a first alternating electric power measuring unit (7) connected between said cogeneration unit (4) and said grid (2) for measuring a first electric power (PG) supplied by the cogeneration unit (4), a second alternating electric power measuring unit (8) connected to the electric load (3) for measuring a second electric power (PL) drawn by the electric load (3), and at least a third alternating electric power measuring unit (9) connected to the output of said electric energy converting means (6) for measuring a third electric power (PS) supplied by the at least one discontinuous source (5); and **in that** said cogeneration unit (4) comprises storage means (13) for storing direct electric energy, second electric energy converting means (14) connecting the storage means (13) to said electric generator (11) to permit energy flow from and to the electric generator (11), third electric energy converting means (15) connected between said storage means (13) and said grid (2) to permit electric energy flow to and from the grid (2), and processing and control means (18) configured to real-time control said endothermic engine (12) and said second and third electric energy converting means (14, 15) so as to regulate said first electric power (PG) in such a way that the sum of the first electric power (PG) and the third electric power (PS) tracks the sum of the second electric power (PL) and a predetermined alternating fourth electric power (PN_in) to be fed into the grid (2).

2.  A system as claimed in Claim 1, wherein said processing and control means (18) regulate said first electric power (PG) to a zero value when said third electric power (PS) at least equals said sum of the second electric power (PL) and fourth electric power (PN_in).

3.  A system as claimed in Claim 1 or 2, wherein said grid (2) and said electric load (3) respectively carry and draw alternating electric energy at a given power frequency (F); said electric generator is a rotary electric generator (11) for producing alternating electric energy at variable frequency (L).

4.  A system as claimed in Claim 3, wherein said processing and control means (18) regulate said first electric power (PG) by varying the speed of said endothermic engine (12).

5.  A system as claimed in Claim 3 or 4, wherein said processing and control means (18) control said second converting means (14) to convert said alternating electric energy at variable frequency (L) to said direct electric energy to recharge said storage means (13) when said grid (2) is unable to supply electric energy.

6.  A system as claimed in one of Claims 3 to 5, wherein said processing and control means (18) control said second converting means (14) to convert said alternating electric energy at variable frequency (L) to said direct electric energy, and control said third converting means (15) to convert the direct electric energy supplied directly by the second converting means (14) and/or stored by the storage means (13) to said alternating electric energy at power frequency (F), so that said first electric power (PG) is regulated independently of the response time of said endothermic engine (12).

7.  A system as claimed in one of the foregoing Claims, wherein said electric generator (11) is an electric motor-generator.

8.  A system as claimed in Claim 7, wherein said processing and control means (18) control said second converting means (14) to convert the direct electric energy stored by the storage means (13) to said alternating electric energy at variable frequency (L), so as to power said electric motor-generator to start said endothermic engine (12).

9.  A system as claimed in one of Claims 3 to 8, wherein said processing and control means (18) control said third converting means (15) to convert said alternating electric energy at power frequency (F) to said direct electric energy to recharge said storage means (13) when the endothermic engine (12) is off.

10. A system as claimed in one of the foregoing Claims, wherein said cogeneration unit (4) comprises a hydraulic circuit (17), in which a heat-carrying fluid circulates, and heat exchange means (16) connected to the hydraulic circuit (17) for recovering thermal energy produced by said endothermic engine (12) so as to heat the heat-carrying fluid.

11. A system as claimed in one of the foregoing Claims, wherein said first electric energy converting means comprise at least a first inverter (6).

12. A system as claimed in one of the foregoing Claims, wherein said second electric energy converting means comprise a second inverter (14), and said third electric energy converting means comprise a third inverter (15).

**Patentansprüche**

1. System zum gleichzeitigen Erzeugen von elektrischer und thermischer Energie, und, anschließbar an ein Netz (2), Liefern von elektrischer Wechselstromenergie; wobei das System (1) ein Blockheizkraftwerk (4) zum Erzeugen von elektrischer und thermischer Energie und zum Liefern elektrischer Wechselstromenergie an eine elektrische Last (3) umfasst; wobei das Blockheizkraftwerk (4) einen elektrischen Generator (11) zum Erzeugen von elektrischer Wechselstromenergie und einen Verbrennungsmotor (12) zum Antreiben des elektrischen Generators (11) umfasst; wobei das System (1) **dadurch gekennzeichnet ist, dass** es umfasst: mindestens eine diskontinuierliche Quelle (5) von elektrischer Energie; erste Elektroenergieumwandlungsmittel (6) die zwischen der diskontinuierlichen Quelle (5) und dem Netz (2) angeordnet sind, um elektrische Energie, die durch die diskontinuierliche Quelle (5) erzeugt wird, in elektrische Wechselstromenergie zur Versorgung der elektrischen Last (3) umzuwandeln; eine erste elektrische Wechselstromenergiemesseinheit (7), die zwischen dem Blockheizkraftwerk (4) und dem Netz (2) angeordnet ist, zum Messen einer ersten elektrischen Leistung (PG) die vom Blockheizkraftwerk (4) geliefert wird; eine zweite elektrische Wechselstromenergiemesseinheit (8), die an die elektrische Last (3) angeschlossen ist, zum Messen einer zweiten elektrischen Leistung (PL), die von der elektrischen Last (3) abgenommen wird; und mindestens eine dritte elektrische Wechselstromenergiemesseinheit (9), die an den Ausgang des elektrischen Energieumwandlungsmittels (6) angeschlossen ist, zum Messen einer dritten elektrischen Leistung (PS), die von der mindestens einen diskontinuierlichen Quelle (5) geliefert wird; und dadurch, dass das Blockheizkraftwerk (4) umfasst: Speichermittel (13) zum Speichern von elektrischer Gleichstromenergie; zweite Elektroenergieumwandlungsmittel (14), die das Speichermittel (13) mit dem elektrischen Generator (11) verbinden, um einen Energiefluss von und zum elektrischen Generator (11) zu ermöglichen; dritte Elektroenergieumwandlungsmittel (15), die zwischen dem Speichermittel (13) und dem Netz (2) angeschlossen sind, um einen elektrischen Energiefluss zum und vom Netz (2) zu ermöglichen; und Verarbeitungs- und Kontrollmittel (18), die zur Echtzeitkontrolle des Verbrennungsmotors (12) und des zweiten und dritten Elektroenergieumwandlungsmittels (14, 15) konfiguriert sind, um die erste elektrische Leistung (PG) so zu regeln, dass die Summe aus der ersten elektrischen Leistung (PG) und der dritten elektrischen Leistung (PS) der Summe aus der zweiten elektrischen Leistung (PL) und einer vorgegebenen vierten elektrischen Wechselstromleistung (PN_in) folgt, die in das Netz (2) eingespeist werden soll.

2. System nach Anspruch 1, wobei das Verarbeitungs- und Kontrollmittel (18) die erste elektrische Leistung (PG) auf einen Wert von null regelt, wenn die dritte elektrische Leistung (PS) zumindest gleich der Summe aus der zweiten elektrischen Leistung (PL) und der vierten elektrischen Leistung (PN_in) ist.

3. System nach Anspruch 1 oder 2, wobei das Netz (2) und die elektrische Last (3) elektrische Energie mit einer gegebenen Netzfrequenz (F) transportieren bzw. abnehmen; der elektrische Generator ein rotierender elektrischer Generator (11) zum Erzeugen von elektrischer Wechselstromenergie bei einer variablen Frequenz (L) ist.

4. System nach Anspruch 3, wobei das Verarbeitungs- und Kontrollmittel (18) die erste elektrische Leistung (PG) durch Variieren der Drehzahl des Verbrennungsmotors (12) regelt.

5. System nach Anspruch 3 oder 4, wobei das Verarbeitungs- und Kontrollmittel (18) das zweite Umwandlungsmittel (14) zum Umwandeln der elektrischen Wechselstromenergie bei variabler Frequenz (L) in die elektrische Gleichstromenergie regelt, um das Speichermittel (13) wieder aufzuladen, wenn das Netz (2) keine elektrische Energie liefern kann.

6. System nach einem der Ansprüche 3 bis 5, wobei das Verarbeitungs- und Kontrollmittel (18) das zweite Umwandlungsmittel (14) regelt, um elektrische Wechselstromenergie bei variabler Frequenz (L) in die elektrische Gleichstromenergie umzuwandeln, und das dritte Umwandlungsmittel (15) regelt, um elektrische Gleichstromenergie, die direkt vom zweiten Umwandlungsmittel (14) geliefert und/oder vom Speichermittel (13) gespeichert wird, in elektrische Wechselstromenergie bei Netzfrequenz (F) umzuwandeln, so dass die erste elektrische Leistung (PG) unabhängig von der Reaktionszeit des Verbrennungsmotors (12) geregelt wird.

7. System nach einem der vorherigen Ansprüche, wobei der elektrische Generator (11) ein elektrischer Motor-Generator ist.

8. System nach Anspruch 7, wobei das Verarbeitungs- und Kontrollmittel (18) das zweite Umwandlungsmittel (14) zum Umwandeln der elektrischen Gleichstromenergie, die vom Speichermittel (13) gespeichert wird, in die elektrische Wechselstromenergie bei variabler Frequenz (L) regelt, um so den elektrischen Motor-Generator zum Starten des Verbrennungsmotors (12) mit Energie zu versorgen.

9. System nach einem der Ansprüche 3 bis 8, wobei das Verarbeitungs- und Kontrollmittel (18) das dritte Umwandlungsmittel (15) regelt, um elektrische Wechselstromenergie bei der Netzfrequenz (F) in die elektrische Gleichstromenergie zum Wiederaufladen des Speichermittels (13) umzuwandeln, wenn der Verbrennungsmotor (12) aus ist.

10. System nach einem der vorherigen Ansprüche, wobei das Blockheizkraftwerk (4) einen Hydraulikkreis (17) umfasst, in dem ein wärmetransportierendes Fluid zirkuliert, und ein Wärmeaustauschmittel (16) umfasst, das an den Hydraulikkreis (17) zum Rückgewinnen der Wärmeenergie angeschlossen ist, die durch den Verbrennungsmotor (12) erzeugt wird, um so das wärmetransportierende Fluid zu erwärmen.

11. System nach einem der vorherigen Ansprüche, wobei das erste elektrische Energie umwandelnde Mittel mindestens einen ersten Inverter (6) umfasst.

12. System nach einem der vorherigen Ansprüche, wobei das zweite elektrische Energie umwandelnde Mittel einen zweiten Inverter (14) umfasst und das dritte elektrische Energie umwandelnde Mittel einen dritten Inverter (15) umfasst.

**Revendications**

1. Système destiné à produire simultanément de l'énergie électrique et de l'énergie thermique, et pouvant être raccordé à une grille (2) d'alimentation en énergie électrique alternative ; le système (1) comprenant une unité de cogénération (4) destinée à générer de l'énergie électrique et de l'énergie thermique, et destinée à alimenter une charge électrique (3) en énergie électrique alternative ; l'unité de cogénération (4) comprenant un générateur électrique (11) destiné à produire de l'énergie électrique alternative et un moteur endothermique (12) destiné à maintenir le générateur électrique (11) en marche ; le système (1) étant **caractérisé en ce qu'**il comprend au moins une source discontinue (5) d'énergie électrique, des premiers moyens de conversion d'énergie électrique (6) raccordés entre la source discontinue (5) d'énergie électrique et la grille (2) pour convertir l'énergie électrique produite par la source discontinue (5) en énergie électrique alternative destinée à alimenter la charge électrique (3), une première unité de mesure de puissance électrique alternative (7) raccordée entre ladite unité de cogénération (4) et ladite grille (2) pour mesurer une première puissance électrique (PG) fournie par l'unité de cogénération (4), une deuxième unité de mesure de puissance électrique alternative (8) raccordée à la charge électrique (3) et destinée à mesurer une deuxième puissance électrique (PL) absorbée par la charge électrique (3), et au moins une troisième unité de mesure de puissance électrique alternative (9) raccordée à la sortie desdits moyens de conversion d'énergie électrique (6) et destinée à mesurer une troisième puissance électrique alternative (PS) fournie par au moins une source discontinue (5) ; et **en ce que** ladite unité de cogénération (4) comprend des moyens de stockage (13) destinés à stocker de l'énergie électrique continue, des deuxièmes moyens de conversion d'énergie électrique (14) raccordant les moyens de stockage (13) audit générateur électrique (11) afin de permettre le flux de l'énergie depuis et vers le générateur électrique (11), et des troisièmes moyens de conversion d'énergie électrique (15) raccordés entre lesdits moyens de stockage (13) et ladite grille (2) afin de permettre le flux d'énergie électrique vers et depuis la grille (2), et des moyens de traitement et de commande (18) configurés pour commander en temps réel ledit moteur endothermique (12) et lesdits deuxièmes et troisièmes moyens de conversion d'énergie électrique (14, 15) de manière à réguler ladite première puissance électrique (PG) de telle façon que la somme de la première puissance électrique (PG) et de la troisième puissance électrique (PS) suit la somme de la deuxième puissance électrique (PL) et d'une quatrième puissance électrique alternative prédéterminée (PN_in) devant alimenter la grille (2).

2. Système selon la revendication 1, dans lequel lesdits moyens de traitement et de commande (18) régulent ladite première puissance électrique (PG) à une valeur nulle lorsque ladite troisième puissance électrique (PS) est au moins égale à ladite somme de la deuxième puissance électrique (PL) et de la quatrième puissance électrique (PN_in).

3. Système selon la revendication 1 ou 2, dans lequel ladite grille (2) et ladite charge électrique (3) portent et absorbent respectivement l'énergie électrique alternative à une fréquence de puissance donnée (F) ; ledit générateur électrique est un générateur électrique rotatif (11) destiné à produire de l'énergie électrique alternative à une fréquence variable (L).

4. Système selon la revendication 3, dans lequel lesdits moyens de traitement et de commande (18) régulent ladite première puissance électrique (PG) en modifiant la vitesse dudit moteur endothermique (12).

5. Système selon la revendication 3 ou 4, dans lequel lesdits moyens de traitement et de commande (18) commandent lesdits deuxièmes moyens de conversion (14) afin de convertir ladite énergie électrique alternative de fréquence variable (L) en ladite énergie électrique continue afin de recharger lesdits moyens de stockage (13) lorsque ladite grille (2) est incapable de fournir de l'énergie électrique.

6. Système selon l'une des revendications 3 à 5, dans lequel lesdits moyens de traitement et de commande (18) commandent lesdits deuxièmes moyens de conversion (14) afin de convertir ladite énergie électrique alternative de fréquence variable (L) en ladite énergie électrique continue, et commandent lesdits troisièmes moyens de conversion (15) afin de convertir l'énergie électrique continue fournie directement par les deuxièmes moyens de conversion (14) et/ou stockée par les moyens de stockage (13) en ladite énergie électrique alternative de fréquence de puissance (F), de sorte que ladite première puissance électrique (PG) est régulée indépendamment du temps de réponse dudit moteur endothermique (12).

7. Système selon l'une des revendications précédentes, dans lequel ledit générateur électrique (11) est un moto-générateur électrique.

8. Système selon la revendication 7, dans lequel lesdits moyens de traitement et de commande (18) commandent lesdits deuxièmes moyens de conversion (14) afin de convertir l'énergie électrique continue stockée par les moyens de stockage (13) en ladite énergie électrique alternative de fréquence variable (L), de manière à alimenter ledit moto-générateur électrique afin de démarrer ledit moteur endothermique (12).

9. Système selon l'une des revendications 3 à 8, dans lequel lesdits moyens de traitement et de commande (18) commandent lesdits troisièmes moyens de conversion (15) pour convertir ladite énergie électrique alternative de fréquence de puissance (F) en ladite énergie électrique continue afin de recharger lesdits moyens de stockage (13) lorsque le moteur endothermique (12) est arrêté.

10. Système selon l'une des revendications précédentes, dans lequel ladite unité de cogénération (4) comprend un circuit hydraulique (17) dans lequel circule un fluide caloporteur, et des moyens d'échange thermique (16) raccordés au circuit hydraulique (17) et destinés à collecter l'énergie thermique produite par ledit moteur endothermique (12) de manière à chauffer le fluide caloporteur.

11. Système selon l'une des revendications précédentes, dans lequel lesdits premiers moyens de conversion d'énergie électrique comprennent au moins un premier inverseur (6).

12. Système selon l'une des revendications précédentes, dans lequel lesdits moyens de conversion d'énergie électrique comprennent un deuxième inverseur (14), et lesdits troisièmes moyens de conversion d'énergie électrique comprennent un troisième inverseur (15).

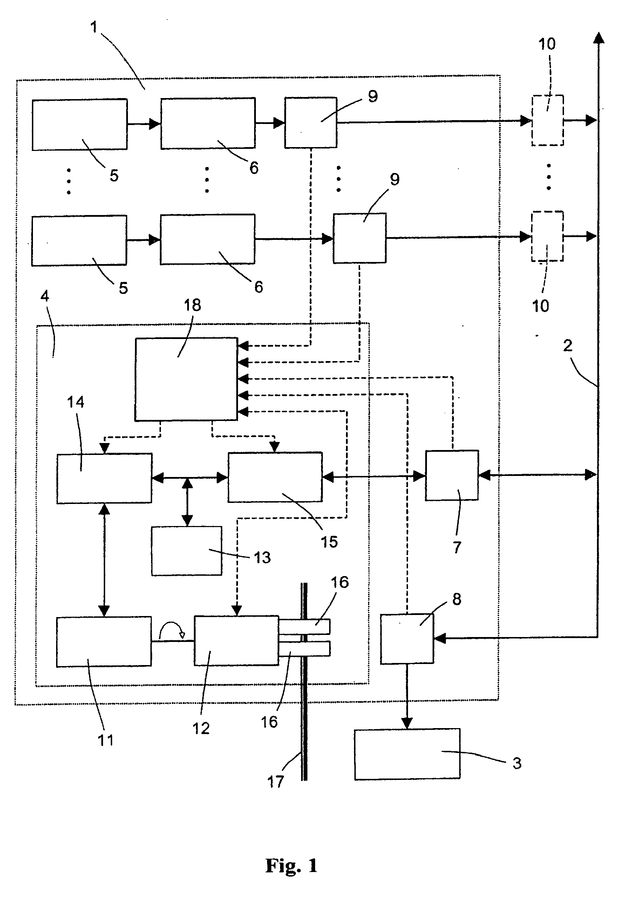

**Fig. 1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6160318 A